# EUROPEAN PATENT APPLICATION

(11) **EP 4 692 594 A1**
(43) Date of publication of application: **11.02.2026**
(21) Application number: 23930259.9
(22) Date of filing: 24.03.2023
(51) Int. Cl.: F16H 1/32

(54) **STRAIN WAVE GEARING**

(71) Applicant: Harmonic Drive Systems Inc., Shinagawa-ku Tokyo 140-0013 (JP)
(72) Inventor: SHIROKOSHI Norio, Azumino-shi, Nagano 399-8305 (JP)
(74) Representative: TBK
(86) International application number: PCT/JP2023/012036
(87) International publication number: WO 2024/201619

(57) **Abstract**

A strain wave gearing (1) comprises a first flange (8) and a second flange (10) which support an input shaft (6) via a first support bearing (7) and a second support bearing (9), respectively. An externally toothed gear (3) is fastened and fixed to the first flange (8) by a first fastening bolt (11), and an internally toothed gear (2) is fastened and fixed to the second flange (10) by a second fastening bolt (12). The radial fastening strength between the externally toothed gear (3) and the first flange (8) by the first fastening bolt (11) is set equal to or greater than the fastening strength between the internally toothed gear (2) and the second flange (10) by the second fastening bolt (12). Misalignment between a wave generator (4) and the first and second support bearings (7, 9) caused by radial deformation generated in the first and second flanges (8, 10) due to radial loads acting from the load side can be suppressed and excessive radial forces acting on the wave generator can be avoided.

## Description

### TECHNICAL FIELD

The present invention relates to a strain wave gearing in which an input shaft attached to a wave generator is supported by support bearings on both axial-direction sides, and the input shaft and wave generator are connected without a coupling such as an Oldham coupling.

### BACKGROUND ART

A strain wave gearing has three basic constituent elements: a rigid internally toothed gear, a flexible externally toothed gear, and a wave generator that causes the externally toothed gear to flex into an ellipsoidal shape and partially mesh with the internally toothed gear. By causing the wave generator to rotate, the positions where the externally toothed gear meshes with the internally toothed gear move in a circumferential direction, and relative rotation corresponding to the difference in the number of teeth between the two gears is generated between the two gears. One of the gears is fixed so as not to rotate, and reduced rotation is outputted from the other gear to a load side.

A known example of a strain wave gearing is configured such that an input shaft is attached to a wave generator, and the input shaft is supported by support bearings at positions on both axial-direction sides of the wave generator (Patent Documents 1 to 3). The support bearing supporting one axial-direction end of the input shaft is mounted to a fixed-side member such as a device housing, and the support bearing supporting the other end of the input shaft is mounted to an output-side member (output shaft) that outputs reduced rotation. Whichever of the internally toothed gear and the externally toothed gear is on the fixed side is attached to a fixed-side member, and the output-side gear that outputs reduced rotation is attached to an output-side member. A load-side member to be driven is connected to the output-side member.

In a strain wave gearing having this configuration, a load such as the weight of the load-side member to be driven is applied to the output-side member. The load applied to the output-side member acts on the support bearing attached to the output-side member. This may result in misalignment between the support bearings and the wave generator connected to the input shaft supported by the support bearings. In the strain wave gearing described in Patent Document 1, the input shaft is connected to the wave generator via an Oldham coupling, and any of such misalignment will be absorbed by the Oldham coupling.

### PRIOE ART LITERATURE

### PATENT DOCUMENT

Patent Document 1: JP 2014-74450 A
Patent Document 2: JP 5496426 B1
Patent Document 3: JP 2002-21948 A

### DISCLOSURE OF THE INVENTION

### PROBLEMS TO BE SOLVED BY THE INVENTION

If the wave generator is not provided with a coupling such as an Oldham coupling, radial force will be applied to the wave generator due to misalignment in such instances as when there is a large load acting from the load side, and the reliability of the strain wave gearing could be compromised. Such misalignment is caused by radial-direction deformation (lateral deformation perpendicular to the axial direction), which occurs due to the load acting from the load side and occurs in the output-side member and fixed-side member supporting the support bearings.

However, in prior-art strain wave gearings, points where fastening is applied using fastening bolts are designed on the basis of a torsional moment (load torque), and fastening strength against radial force at the fastening points is sufficient; therefore, the radial force has not been given importance. In other words, no attention has been paid to radial-direction deformation in the design of the fastening points.

When a strain wave gearing is designed on the basis of the torsional moment (load torque), the size and number of fastening bolts are set so that, for example, the fastening strength between the internally toothed gear, which is the gear on the output side, and the output-side member to which the internally toothed gear is attached and the fastening strength between the externally toothed gear, which is the gear on the fixed side, and the fixed-side member to which the externally toothed gear is attached are approximately the same in the rotational direction. In a top-hat type strain wave gearing, an outer diameter of a boss of the externally toothed gear, which is fastened with bolts to the fixed-side member, is greater than an outer diameter of the fastening internally toothed gear, which is fastened with bolts to the output-side member. Therefore, when fastening bolts of the same size are used, the number of fastening bolts on the externally toothed gear side required to ensure fastening strength in the rotational direction can be less than the number of fastening bolts on the internally toothed gear side. As a result, the fastening strength in the radial direction between the externally toothed gear and the fixed-side member will end up being lower than the fastening strength in the radial direction between the internally toothed gear and the output-side member. If the fastening strength in the radial direction is low, radial-direction deformation, which is a cause of misalignment, may occur due to radial force acting from the load side.

With the foregoing in view, it is an object of the present invention to provide a strain wave gearing in which an input shaft attached to a wave generator is supported by support bearings on both axial-direction sides, and the input shaft and the wave generator are connected without a coupling such as an Oldham coupling, wherein radial-direction deformation occurring at fastening points due to a load acting from a load side is minimized, and misalignment between the wave generator and the support bearings is prevented.

### MEANS USED TO SOLVE THE PROBLEMS

In the present invention, a strain wave gearing comprising:
a rigid internally toothed gear;
a flexible externally toothed gear coaxially disposed inside the internally toothed gear;
a wave generator coaxially disposed inside the externally toothed gear;
an input shaft coaxially attached to the wave generator;
a first flange that rotatably supports, via a first support bearing, a first shaft part of the input shaft extending from the wave generator to one side in an axial direction;
a second flange that rotatably supports, via a second support bearing, a second shaft part of the input shaft extending from the wave generator to the other side in the axial direction;
a plurality of first fastening bolts that fasten and fix the externally toothed gear to the first flange; and
a plurality of second fastening bolts that fasten and fix the internally toothed gear to the second flange,
the wave generator being attached to the input shaft without a coupling,
characterized in that:
   a radial-direction distance from a rotation center to fastening positions of the first fastening bolts being greater than a radial-direction distance from the rotation center to fastening positions of the second fastening bolts; and
   radial-direction fastening strength between the externally toothed gear and the first flange as provided by the first fastening bolts being set to be at least the same as radial-direction fastening strength between the internally toothed gear and the second flange as provided by the second fastening bolts.

In order to position the externally toothed gear and the first flange, a "socket-and-spigot" fitting part may be formed therebetween. In this case, it is preferable that the socket-and-spigot fitting part has a transition fit to minimize radial-direction displacement. It is also preferable that the fitting part formed between the internally toothed gear and the second flange has a transition fit. That is, in the strain wave gearing of the present invention, it is preferable that between the externally toothed gear and the first flange, a first fitting part is formed in which the externally toothed gear is fitted and fixed to the first flange, or vice versa, from the axial direction in a transition fit state, and
between the internally toothed gear and the second flange, a second fitting part is formed in which the internally toothed gear is fitted and fixed to the second flange, or vice versa, from the axial direction in a transition fit state.

In this case, it is preferable to form a removal tap between the externally toothed gear and the first flange so that the two components can be easily disassembled. It is also preferable to similarly form a removal tap between the internally toothed gear and the second flange.

When no socket and spigot is provided between the externally toothed gear and the first flange, radial-direction deformation can be minimized by pressing in press-fit pins to position and fix the externally toothed gear and the first flange. Similarly, radial-direction deformation can be minimized between the internally toothed gear and the second flange by pressing press-fit pins therein.

### EFFECT OF THE INVENTION

In the strain wave gearing of the present invention, the radial-direction fastening strength between the externally toothed gear and the first flange is set to be the same as or greater than the fastening strength between the internally toothed gear and the second flange. This makes it possible to prevent or minimize misalignment between the wave generator and the support bearings caused by radial-direction deformation caused by a radial-direction load acting from the load side, and to avoid unnecessary radial force acting on the wave generator.

### BRIEF DESCRIPTION OF THE DRAWINGS

FIG. 1(A) is a schematic longitudinal cross-sectional view of a strain wave gearing to which the present invention is applied, FIG. 1(B) is an end surface view seen from the side of a first flange, which is a fixed-side member of the strain wave gearing, FIG. 1(C) is an end surface view seen from the side of a second flange, which is an output-side member of the strain wave gearing; and
FIG. 2 is a schematic longitudinal cross-sectional view of a strain wave gearing according to another embodiment to which the present invention is applied.

### MODE FOR CARRYING OUT THE INVENTION

A strain wave gearing according to an embodiment to which the present invention is applied shall be described below with reference to the drawings. The embodiment described below presents one example of the present invention and is not provided by way of limitation on the present invention.

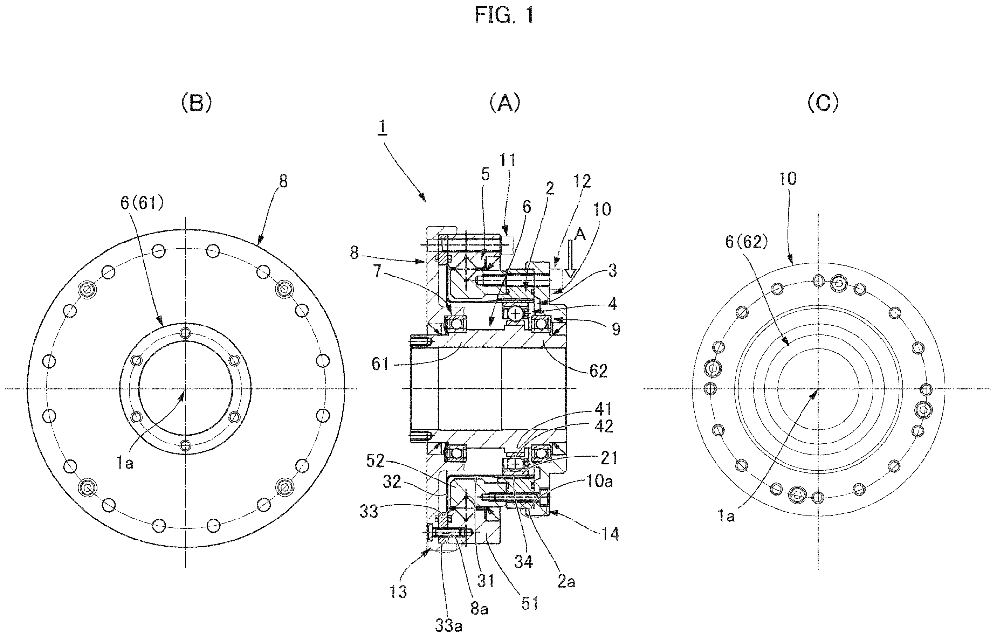

Referring to FIG. 1, a strain wave gearing 1 according to an embodiment of the present invention includes a rigid internally toothed gear 2 having a circular ring shape, a flexible externally toothed gear 3 capable of flexing in a radial direction and disposed coaxially inside the internally toothed gear 2, and a wave generator 4 disposed coaxially inside the externally toothed gear 3. The wave generator 4 causes the externally toothed gear 3 to flex into a non-circular shape, in this example an ellipsoidal shape, to partially mesh with the internally toothed gear 2, and causes the meshing positions of the gears 2, 3 to move in a circumferential direction.

The internally toothed gear 2 and the externally toothed gear 3 are supported in a relatively rotatable state by a main bearing 5 composed of, for example, a cross roller bearing. An input shaft 6 that inputs rotation from a motor or the like (not shown) is coaxially attached to the wave generator 4. The wave generator 4 in this example includes a rigid cam plate 41 and a wave generator bearing 42 mounted to the non-circular outer circumferential surface of the cam plate 41, which in this example is an ellipsoidal outer circumferential surface. The cam plate 41 is formed integrally on the input shaft 6. The cam plate 41 may be fabricated as a separate component and coaxially fastened and fixed to the input shaft 6. The input shaft 6 is a hollow shaft but may be a solid shaft.

In the input shaft 6, a portion extending from the cam plate 41 of the wave generator 4 to one axial-direction side is referred to as a first shaft part 61, and a portion extending to the other axial-direction side is referred to as a second shaft part 62. The first shaft part 61 of the input shaft 6 is rotatably supported by a first flange 8 (fixed-side member) via a first support bearing 7 made of a ball bearing or the like. The second shaft part 62 of the input shaft 6 is rotatably supported by a second flange 10 (output-side member that outputs reduced rotation) via a second support bearing 9 made of a ball bearing or the like. The internally toothed gear 2, the externally toothed gear 3, the wave generator 4, and the main bearing 5 are disposed between the first and second flanges 8, 10.

The externally toothed gear 3 is a "top hat" shaped externally toothed gear and includes a cylindrical barrel part 31 capable of flexing in the radial direction, a diaphragm 32 extending radially outward from one end of the cylindrical barrel part 31, an annular boss 33 integrally formed on an outer peripheral edge of the diaphragm 32, and external teeth 34 formed on an outer peripheral surface portion at the side of an opening end, which is the other end of the cylindrical barrel part 31. An outer diameter of the boss 33 of the externally toothed gear 3 is larger than an outer diameter of the internally toothed gear 2. The wave generator 4 is fitted inside the cylindrical barrel part 31 on which the external teeth 34 are formed. The external teeth 34 of the externally toothed gear 3, which is caused to flex into an ellipsoidal shape by the wave generator 4, mesh with internal teeth 21 of the internally toothed gear 2 at both ends of the major axis of the ellipsoidal shape.

The main bearing 5 is disposed so as to coaxially surround the portion between the external teeth 34 and the diaphragm 32 in the cylindrical barrel part 31 of the externally toothed gear 3. An outer ring 51 of the main bearing 5 is coaxially fixed to the boss 33 of the externally toothed gear 3. In this example, three members, namely, an outer-peripheral-side portion of the first flange 8, the boss 33 of the externally toothed gear 3, and the outer ring 51, are fastened and fixed by a plurality of first fastening bolts 11. An inner ring 52 of the main bearing 5 is coaxially fixed to the internally toothed gear 2. In this example, three members, namely, an outer-peripheral-side portion of the second flange 10, the internally toothed gear 2, and the inner ring 52, are fastened and fixed by a plurality of second fastening bolts 12.

In the strain wave gearing 1, when the wave generator 4 rotates due to the rotation inputted via the input shaft 6, the positions where the externally toothed gear 3 meshes with the internally toothed gear 2 move in the circumferential direction. A relative rotation is generated between the internally toothed gear 2 and the externally toothed gear 3, the rotation being reduced in speed at a speed ratio determined by the difference in the number of teeth between the internal teeth 21 and the external teeth 34. In this example, the externally toothed gear 3 attached to the first flange 8 side is the fixed side, and the internally toothed gear 2 attached to the second flange 10 side is the rotation side. The reduced rotation generated in the internally toothed gear 2 is outputted via the second flange 10 to a load-side member (not shown) .

The wave generator 4 of the strain wave gearing 1 of this example is not provided with a coupling such as an Oldham coupling, and the cam plate 41 of the wave generator 4 is integrally formed on the input shaft 6. A radial-direction load (indicated by arrow A in FIG. 1(A)) acting from the load side on the second flange 10, which is an output-side member, can cause misalignment between the wave generator 4 and the first and second support bearings 7, 9 mounted on the first and second flanges 8, 10. Attributes such as the fastening strength of the fastening points between the internally toothed gear 2 and the second flange 10 and between the externally toothed gear 3 and the first flange 8 are set so as to reduce the radial-direction deformation of the first and second flanges 8, 10 that causes such misalignment.

First, the first fastening bolts 11 for fastening and fixing the externally toothed gear 3 to the first flange 8 are attached to the boss 33, and the size and number of the first fastening bolts 11 are set on the basis of the torsion moment (load torque) applied to the fastening points, and are set in consideration of the radial force applied to the fastening points. Similarly, the size and number of the second fastening bolts 12 for fastening and fixing the internally toothed gear 2 to the second flange 10 are set on the basis of the torsion moment (load torque) applied to the fastening points, and are set taking into account the radial force applied to the fastening points. This minimizes radial-direction deformation occurring in the first and second flanges 8, 10 due to the load acting from the load side, and prevents or minimizes misalignment between the wave generator 4 and the first and second support bearings 7, 9 supported by the first and second flanges 8, 10. By setting the fastening strength in consideration of the radial force, the radial-direction fastening strength between the externally toothed gear 3 and the first flange 8 provided by the first fastening bolts 11 is set to be the same as or greater than the radial-direction fastening strength between the internally toothed gear 2 and the second flange 10 provided by the second fastening bolts 12.

When fastening bolts of the same size are used, the radial-direction fastening strength is proportional to the number of bolts. For example, the internally toothed gear 2 and the second flange 10 are fastened by 16 second fastening bolts 12 (e.g., M4 high-strength bolts) placed at equal angular intervals. In this case, the boss 33 of the externally toothed gear 3 and the first flange 8 are fastened by 16 or more first fastening bolts 11 (e.g., M4 high-strength bolts) placed at equal angular intervals. This makes it possible to make the radial-direction fastening strength on the externally toothed gear 3 side equal to or greater than the radial-direction fastening strength on the internally toothed gear 2 side.

As can be seen from FIGS. 1(B) and 1(C), the outer diameter of the boss 33 of the top-hat-shaped externally toothed gear 3 is larger than the outer diameter of the internally toothed gear 2. Therefore, a radial-direction distance from a rotation center 1a to the attachment positions of the first fastening bolts 11 on the boss 33 is greater than a distance from the rotation center 1a to the attachment positions of the second fastening bolts 12 on the internally toothed gear 2. Therefore, the fastening strength in the rotation direction at these fastening points is greater on the externally toothed gear 3 side when the same size and number of fastening bolts are used. In the prior art, points where fastening is performed using fastening bolts are designed on the basis of the fastening strength in the rotation direction. For example, when fastening bolts of the same size are used, the number of fastening bolts fastening the externally toothed gear 3 and the first flange 8 together is smaller than the number of fastening bolts fastening the internally toothed gear 2 and the second flange 10 together. As a result, the radial-direction fastening strength between the externally toothed gear 3 and the first flange 8 is lower than the fastening strength between the internally toothed gear 2 and the second flange 10. When a large radial-direction force is applied from the load side, a large radial-direction displacement occurs, which can cause misalignment between the first and second support bearings 7, 9 and the wave generator 4. With the strain wave gearing 1 of this embodiment, such problems can be avoided.

Next, in this example, in order to position and fix the externally toothed gear 3 and the first flange 8 from the axial direction, a "socket-and-spigot" fitting part 13 is formed therebetween. As shown in FIG. 1(A), a circular inner peripheral surface 8a is formed on an outer peripheral edge part of the first flange 8, and a circular outer peripheral surface 33a of the boss 33 of the externally toothed gear 3 is fitted into the circular inner peripheral surface 8a from the axial direction. In this fitting part 13, the circular outer peripheral surface 33a of the boss 33 is fitted into the circular inner peripheral surface 8a of the first flange 8 in a transition fit state. This minimizes radial-direction displacement of the first flange 8 relative to the boss 33 of the externally toothed gear 3 and the outer ring 51 of the main bearing 5.

Similarly, in order to position and fix the internally toothed gear 2 and the second flange 10 from the axial direction, a socket-and-spigot fitting part 14 is formed therebetween. As shown in FIG. 1(A), a circular inner peripheral surface 10a is formed on an outer peripheral edge part of the second flange 10, and a circular outer peripheral surface 2a of the internally toothed gear 2 is fitted into the circular inner peripheral surface 10a from the axial direction. In this fitting part 14, the circular outer peripheral surface 2a of the internally toothed gear 2 is fitted into the circular inner peripheral surface 10a of the second flange 10 in a transition fit state. This minimizes radial-direction displacement of the second flange 10 relative to the internally toothed gear 2.

When the externally toothed gear 3 and the first flange 8 are fitted together in a transition fit in this manner, it is preferable to provide a removal tap (not shown) on the first flange 8, taking into account cases where externally toothed gear 3 and the first flange 8 are disassembled. It is also preferable to similarly provide a removal tap on the second flange 10.

As described above, in the strain wave gearing 1, the fastening strength between the externally toothed gear 3 and the first flange 8, particularly the fastening strength in the radial direction, is set so as to be equal to or greater than the fastening strength between the internally toothed gear 2 and the second flange 10. In addition, a fitting part 13 having a transition fit is formed between the externally toothed gear 3 and the first flange 8, and a fitting part 14 having a transition fit is similarly formed between the internally toothed gear 2 and the second flange 10. This makes it possible to minimize radial-direction deformation of the first and second flanges 8, 10 caused by a radial-direction load acting from the load side. As a result, it is possible to prevent or minimize misalignment between the wave generator 4 and the first and second support bearings caused by radial-direction deformation, and to avoid excessive radial force acting on the wave generator 4.

### (Other embodiments)

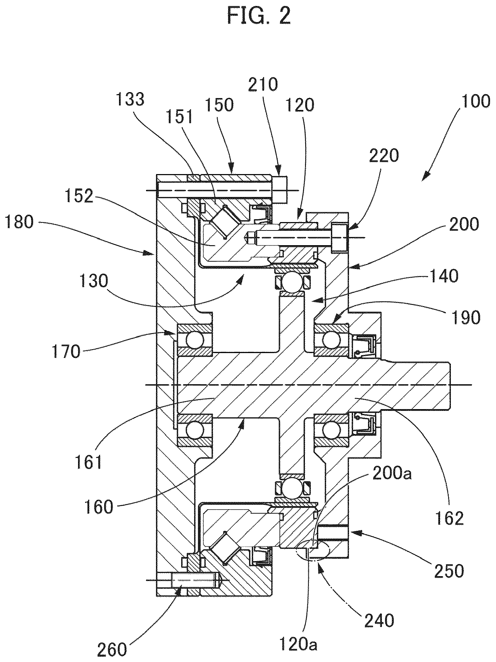

FIG. 2 is a schematic longitudinal cross-sectional view of a strain wave gearing according to another embodiment of the present invention. Since the basic configuration of the strain wave gearing 100 shown in this drawing is similar to that of the strain wave gearing 1 of FIG. 1, a simplified description of this configuration shall be given below.

The strain wave gearing 100 includes a rigid internally toothed gear 120, a top-hat shaped flexible externally toothed gear 130 coaxially disposed inside the internally toothed gear 120, a wave generator 140 coaxially disposed inside the externally toothed gear 130, a main bearing 150 that supports the internally toothed gear 120 and the externally toothed gear 130 in a state where the two gears can rotate freely relative to each other, and an input shaft 160 coaxially attached to the wave generator 140. The wave generator 140 is attached to the input shaft 160 without using a coupling such as an Oldham coupling.

The input shaft 160 includes a first shaft part 161 extending from the wave generator 140 to one side in the axial direction, and a second shaft part 162 extending to the other side. The first shaft part 161 is rotatably supported by a first flange 180 via a first support bearing 170. The second shaft part 162 of the input shaft 160 is rotatably supported by a second flange 200 via a second support bearing 190. A boss 133 of the externally toothed gear 130 and an outer ring 151 of the main bearing 150 are fastened and fixed to the first flange 180 by a plurality of first fastening bolts 210. The internally toothed gear 120 and an inner ring 152 of the main bearing 150 are fastened and fixed to the second flange 200 by a plurality of second fastening bolts 220. The fastening strength between the externally toothed gear 130 and the first flange 180 provided by the first fastening bolts 210 is set to be the same as or greater than the fastening strength between the internally toothed gear 120 and the second flange 200 provided by the second fastening bolts 220.

Between the internally toothed gear 120 and the second flange 200, a fitting part 240 is formed in which a circular outer peripheral surface 120a of the internally toothed gear 120 is fitted and fixed to a circular inner peripheral surface 200a of the second flange 200 in a transition fit from the axial direction. A removal tap 250 is provided on the second flange 200 so that the internally toothed gear 120 can be easily separated. By contrast, no fitting part having a transition fit is formed between the externally toothed gear 130 and the first flange 180. Instead, press-fit pins 260 are driven in the axial direction from the first flange 180 side between the boss 133 of the externally toothed gear 130 and the portion on the outer-peripheral-edge side of the first flange 180. The press-fit pins 260 are placed at a plurality of positions spaced apart in the circumferential direction.

Thus, in the strain wave gearing 100, the fastening strength between the externally toothed gear 130 and the first flange 180, particularly the fastening strength in the radial direction, is set to be equal to or greater than the fastening strength between the internally toothed gear 120 and the second flange 200. In addition, a fitting part 240 having a transition fit is formed between the internally toothed gear 120 and the second flange 200, and the boss 133 of the externally toothed gear 130 and the first flange 180 are positioned and fixed together by the press-fit pins 260. This makes it possible to minimize radial-direction deformation of the first and second flanges 180, 200 caused by a radial-direction load acting from the load side. As a result, it is possible to prevent or minimize misalignment between the wave generator 140 and the first and second support bearings 170, 190 caused by radial-direction deformation, and to avoid excessive radial force acting on the wave generator 140.

## Claims

1. A strain wave gearing comprising:
a rigid internally toothed gear;
a flexible externally toothed gear coaxially disposed inside the internally toothed gear;
a wave generator coaxially disposed inside the externally toothed gear;
an input shaft coaxially attached to the wave generator;
a first flange that rotatably supports, via a first support bearing, a first shaft part of the input shaft extending from the wave generator to one side in an axial direction;
a second flange that rotatably supports, via a second support bearing, a second shaft part of the input shaft extending from the wave generator to the other side in the axial direction;
a plurality of first fastening bolts that fasten and fix the externally toothed gear to the first flange; and
a plurality of second fastening bolts that fasten and fix the internally toothed gear to the second flange,
the wave generator being attached to the input shaft without a coupling,
the strain wave gearing being **characterized in that**:
a radial-direction distance from a rotation center to fastening positions of the first fastening bolts being greater than a radial-direction distance from the rotation center to fastening positions of the second fastening bolts; and
radial-direction fastening strength between the externally toothed gear and the first flange as provided by the first fastening bolts being set to be at least the same as radial-direction fastening strength between the internally toothed gear and the second flange as provided by the second fastening bolts.

2. The strain wave gearing according to claim 1, further comprising:
a first fitting part formed between the externally toothed gear and the first flange, in which the externally toothed gear is fitted and fixed to the first flange, or vice versa, along the axial direction in a transition fit state; and
a second fitting part formed between the internally toothed gear and the second flange, in which the internally toothed gear is fitted and fixed to the second flange, or vice versa, along the axial direction in a transition fit state.

3. The strain wave gearing according to claim 2, further comprising:
a first removal tap formed between the externally toothed gear and the first flange; and
a second removal tap formed between the internally toothed gear and the second flange.

4. The strain wave gearing according to claim 1, further comprising:
at least one first press-fit pin that is press-fitted into the externally toothed gear and the first flange along the axial direction so that the externally toothed gear and the first flange are positioned and fixed together; and
at least one second press-fit pin that is press-fitted into the internally toothed gear and the second flange along the axial direction so that the internally toothed gear and the second flange are positioned and fixed together.
